# FASCICULE DE BREVET EUROPEEN

(11) **EP 4 151 961 B1**
(45) Date de publication et mention de la délivrance du brevet: **03.07.2024**
(21) Numéro de dépôt: 22194937.3
(22) Date de dépôt: 09.09.2022
(51) Int. Cl.: G01G 19/52, A47J 31/44

(54) **PROCEDE DE CALIBRATION D'UN CAPTEUR DE POIDS AGENCE SUR LE RESERVOIR D'UNE MACHINE DE DISTRIBUTION DE BOISSONS**
VERFAHREN ZUR KALIBRIERUNG EINES GEWICHTSSENSORS, DER AUF DEM TANK EINER GETRÄNKEMASCHINE ANGEORDNET IST
METHOD FOR CALIBRATING A WEIGHT SENSOR ARRANGED ON THE TANK OF A BEVERAGE DISPENSING MACHINE

(30) Priorité: 20.09.2021 FR 2109852
(43) Date de publication de la demande: 22.03.2023
(73) Titulaire: SEB S.A., 69130 Ecully (FR)
(72) Inventeur: PETIT, Michel, 69134 ECULLY CEDEX (FR); MUGNIER, Cédric, 69134 ECULLY CEDEX (FR); SMAL, Chloe, 69134 ECULLY CEDEX (FR); PETITALLOT, Johann, 69134 ECULLY CEDEX (FR)
(74) Mandataire: SEB Développement

(56) Documents cités:
- US-A1- 2008 282 898
- US-A1- 2017 108 367

## Description

### Domaine technique

La présente invention concerne le domaine technique général des machines de distribution de boissons qui comporte un réservoir de liquide muni d'un capteur de poids permettant de mesurer une valeur représentative du poids du réservoir et du liquide présent dans le réservoir.

### Etat de la technique

Il est connu du document KR0146177 une machine de distribution de boissons qui comporte un bâti, un réservoir de liquide monté mobile dans le bâti, un dispositif de soutirage du liquide et un système de commande. Le capteur de poids est agencé entre le réservoir et le bâti pour déterminer et transmettre au dispositif de commande une valeur représentative du poids du réservoir et du liquide présent dans le réservoir.

Cependant, les capteurs de poids économiques, notamment les jauges de contraintes, utilisés dans une telle machine présentent des dispersions de mesure importantes d'un capteur à l'autre. De plus, de tels capteurs de poids présentent des dispersions qui apparaissent dans le temps. Ainsi, pour obtenir une mesure précise du poids du liquide présent dans le réservoir, il est nécessaire prévoir une opération de calibration du capteur de poids une fois celui-ci monté dans la machine et de manière cyclique pendant la durée d'utilisation de la machine de distribution de boissons.

Mais une telle opération de calibration du capteur de poids est souvent complexe et couteuse.

D'autres procédés de calibration de capteurs disposés sur une machine de distribution de boissons sont connus à partir des documents US 2017/108367 A1 et US 2008/282898 A.

### Résumé de l'invention

La présente invention vise à remédier à ces inconvénients.

Le problème technique à la base de l'invention consiste à proposer un procédé de calibration d'un capteur de poids agencé sur le réservoir d'une machine de distribution de boissons qui permette de connaitre précisément le volume de liquide présent dans le réservoir ou le volume de liquide distribué, ceci tout au long de la vie de la machine de distribution de boissons.

Un autre but de l'invention est de proposer un procédé de calibration d'un capteur de poids agencé sur le réservoir d'une machine de distribution de boissons qui soit simple et économique à mettre en oeuvre.

A cet effet, l'invention a pour objet un procédé de calibration d'un capteur de poids agencé sur une machine de distribution de boissons qui comporte un bâti, un réservoir de liquide monté mobile dans le bâti, un dispositif de soutirage du liquide et un système de commande, ledit capteur de poids étant agencé entre le réservoir et le bâti pour déterminer et transmettre au dispositif de commande une valeur représentative du poids du liquide présent dans le réservoir, caractérisé en ce que le réservoir comporte selon une direction verticale une première portion présentant une section transversale S1 et une deuxième portion présentant une section transversale S2 et en ce que ledit procédé comporte les étapes :
- a) Remplir le réservoir de liquide,
- b) Mettre en marche le dispositif de soutirage du liquide,
- c) Enregistrer la valeur Vi mesurée par le capteur de poids tous les intervalles de temps Ti dans une mémoire du système de commande pour déterminer une courbe C : Vi = f(Ti),
- d) Déterminer une pente P1 d'une première droite Dr1 de la courbe C correspondant au soutirage de la première portion et une pente P2 d'une deuxième droite Dr2 de la courbe C correspondant au soutirage de la deuxième portion,
- e) Déterminer à partir du point d'intersection PI des première et deuxième droites la valeur V1 mesurée par le capteur de poids,
- f) Calibrer le capteur de poids en associant la valeur mesurée V1 au poids du liquide contenu dans la première portion.

Par dispositif de soutirage, on comprend que, en fonctionnement, le dispositif de soutirage soutire le liquide avec un débit sensiblement constant.

On comprend qu'à partir du poids, le système de commande peut déterminer le volume de liquide présent dans le réservoir et qu'à partir d'une variation de poids, le système de commande peut déterminer un volume de liquide distribué.

On comprend que les étapes b) à f) sont mises en oeuvre par le système de commande.

Ainsi, lors du soutirage du réservoir, le point d'intersection PI sur la courbe C correspondant au changement de section entre la deuxième portion et la première portion, est clairement identifié et permet de réaliser une première opération de calibrage du capteur.

Le calibrage du capteur de poids peut être réalisé une première fois en usine puis le calibrage du capteur de poids peut être réalisé, de manière cyclique, par le système de commande pendant toute la vie de la machine de distribution de boissons lorsque la recette ou les recettes demandées par l'utilisateur mettent en oeuvre le volume de liquide contenu dans le réservoir. Le calibrage du capteur de poids peut être également demandé à l'utilisateur par le système de commande.

On comprend que comme le poids du réservoir est fixe et connu précisément, les signaux de valeur Vi transmis par le capteur de poids sont représentatifs du poids ou du volume de liquide présent dans le réservoir.

Avantageusement, le procédé comporte les étapes :
- g) Déterminer à partir de la courbe la valeur mesurée V2 par le capteur de poids lorsque le réservoir est vide,
- h) Calibrer le capteur de poids en associant la valeur mesurée V2 au poids du liquide égal à zéro.

Ainsi, lors du soutirage du réservoir, le point sur la courbe correspondant au réservoir vide est clairement identifié et permet de réaliser une deuxième opération de calibrage du capteur.

De préférence le rapport S1 sur S2 est inférieur à 0,8.

Ainsi, la différence entre la pente P1 de la première droite D1 de la courbe correspondant au soutirage de la première portion et la pente P2 de la deuxième droite D2 de la courbe correspondant au soutirage de la deuxième portion est suffisamment importante pour bien identifier le point d'intersection PI des première et deuxième droites.

Avantageusement, le réservoir est mobile en rotation dans le bâti autour d'un axe de rotation horizontal.

La rotation est une solution fiable et économique pour rendre le réservoir mobile par rapport au bâti.

De préférence, le réservoir comporte une paroi latérale, l'axe de rotation étant agencé le long de la paroi latérale.

Ainsi, dans une projection verticale sur un plan horizontal, l'axe de rotation, le centre de gravité de la première portion et le centre de gravité de la deuxième portion peuvent être suffisamment éloignés.

De manière avantageuse, l'axe de rotation est agencé à proximité d'un bord supérieur de la paroi latérale.

Avantageusement, le réservoir comporte une paroi de fond, le capteur de poids étant agencé entre la paroi de fond et le bâti.

De manière avantageuse, le capteur est agencé sur un premier bord du fond opposé à un deuxième bord du fond relié à la paroi latérale sur laquelle est agencé l'axe de rotation.

Ainsi, dans une projection verticale sur un plan horizontal, l'axe de rotation et le capteur de poids peuvent être suffisamment éloignés, le centre de gravité de la première portion et le centre de gravité de la deuxième portion étant positionnés entre l'axe de rotation et le capteur de poids.

De préférence, la première portion du réservoir est agencée au-dessous de la deuxième portion.

Ainsi, le réservoir peut être facilement réalisé en matière plastique par injection, le réservoir étant démoulable simplement.

Avantageusement, la première portion du réservoir présente une hauteur H1 et la deuxième portion du réservoir présente une hauteur H2, le rapport H1 sur H2 étant supérieur à 0,5.

Ainsi, le segment de la première droite correspondant au soutirage de la première portion du réservoir est suffisamment long pour bien définir la pente P1.

De préférence, le capteur de poids comporte une jauge de contrainte agencée sur un corps métallique qui subit une déformation sous l'action du poids du liquide présent dans le réservoir.

Une telle construction du capteur de poids est particulièrement économique.

Avantageusement, la machine de distribution de boissons est une machine à café filtre ou une machine à thé et le dispositif de soutirage du liquide comporte une chaudière bitube.

Ainsi, en calibrant régulièrement le capteur de poids, le système de commande de la machine peut distribuer avec précision un poids ou un volume de liquide conforme à un poids ou un volume de liquide demandé pour une recette.

### Brève description des figures

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
La figure 1 est une vue schématique d'une machine de distribution de boissons comportant un capteur de poids, la machine de distribution de boissons mettant en oeuvre le procédé de calibration du capteur de poids selon un mode particulier de réalisation de l'invention.
La figure 2 est une vue schématique en perspective du réservoir de la machine de distribution de boissons illustrée sur la figure 1.
La figure 3 est un graphique représentant la valeur représentative du poids relevé par le capteur de poids en fonction du temps, le capteur de poids étant agencé dans la machine de distribution de boissons illustrée sur la figure 1.

Seuls les éléments nécessaires à la compréhension de l'invention ont été représentés. Pour faciliter la lecture des dessins, les mêmes éléments portent les mêmes références d'une figure à l'autre.

On notera que dans ce document, les termes "horizontal", "vertical", "inférieur", "supérieur", "haut", "bas", "avant", "arrière", "longitudinal", "transversal", employés pour décrire la machine de distribution de boissons font référence à cette machine de distribution de boissons reposant sur un plan de travail, en situation d'usage.

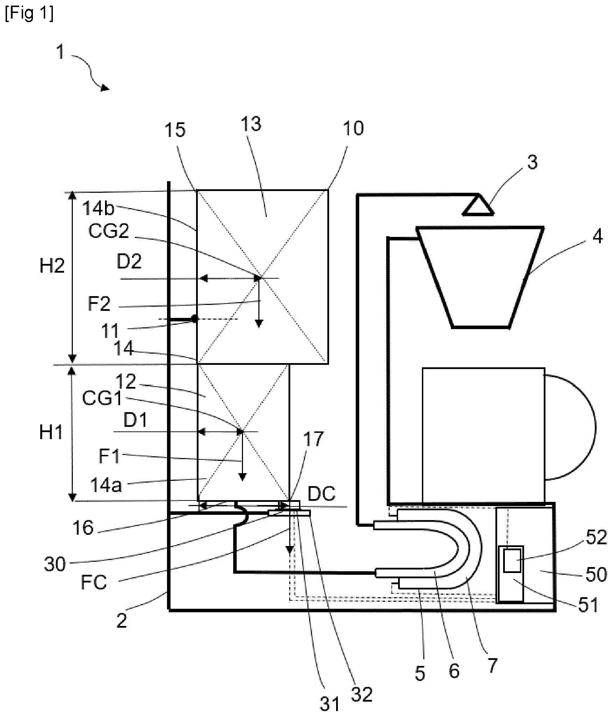

Dans l'exemple de réalisation représenté aux figures 1 à 3, la machine de distribution de boissons est une cafetière filtre 1. La cafetière filtre 1 comporte un bâti 2, un réservoir 10, un capteur de poids 30, une chaudière bitube 5, une douchette 3, un porte filtre 4 et un système de commande 50. Le réservoir 10 est destiné à recevoir un liquide qui est formé par de l'eau. Le réservoir 10 est mobile en rotation dans le bâti 2 autour d'un axe de rotation horizontal 11.

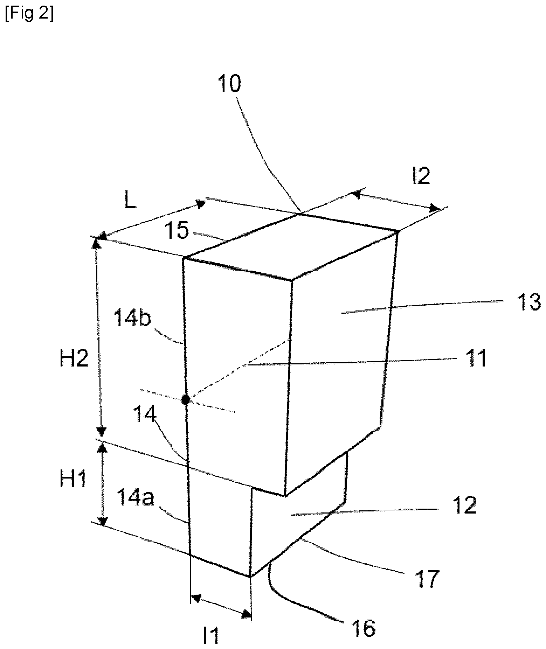

Le réservoir 10 comporte une première portion 12 qui présente une longueur L, une largeur l1 et une hauteur H1 (Fig. 2). Ainsi la première portion 12 présente une section transversale S1 égale à L x l1. Le réservoir 10 comporte une deuxième portion 13 qui présente une longueur L et une largeur l2 et une hauteur H2. Ainsi, la deuxième portion 13 présente une section transversale S2 égale à L x l2. La deuxième portion 13 est agencée au-dessus de la première portion 12. Le réservoir 10 comporte une paroi latérale 14 qui s'étend dans un plan vertical. La paroi latérale 14 comporte une première partie 14a qui appartient à la première portion 12 et une deuxième partie 14b qui appartient à la deuxième portion 13. La première partie 14a est alignée avec la deuxième partie 14b. La paroi latérale 14 comporte un bord supérieur 15. L'axe de rotation 11 est agencé à proximité du bord supérieur 15. La première portion 12 du réservoir 10 comporte une paroi de fond 16. Le capteur de poids 30 est agencé entre le bâti 2 et la paroi de fond 16, à proximité d'un bord 17 situé à l'opposé de la paroi latérale 14 sur laquelle est agencé l'axe de rotation 11. Ainsi, la gravité applique sur le réservoir 10 et l'eau contenue dans le réservoir 10 un couple qui génère sur le capteur de poids 30 une force représentative du poids du réservoir 10 et de l'eau contenue dans le réservoir 10. Le poids du réservoir 10 étant fixe et connu, les signaux transmis par le capteur de poids 30 sont représentatifs du poids ou du volume d'eau présente dans le réservoir 10.

Conformément à la figure 1, la chaudière bitube 5 de la cafetière filtre 1 comporte un tube à eau 6 et un élément chauffant 7 tubulaire reliés ensemble pour que le flux thermique produit par l'élément chauffant 7 soit transmis à l'eau circulant dans le tube à eau 6. Une fois l'élément chauffant 7 mis sous tension, la chaudière bitube 5 forme un dispositif de soutirage du liquide qui transfère l'eau contenue dans le réservoir 10 vers la douchette 3 qui est agencée au-dessus du porte filtre 4. Le porte filtre 4 est destiné à recevoir un filtre et de la mouture de café. La quantité de mouture de café est dosée soit pour réaliser une verseuse de café complète qui correspond au volume d'eau complet contenu le réservoir 10 ou soit pour réaliser un nombre de tasse de café. Dans ce cas, le système de commande 50 pilote la chaudière bitube 5 pour distribuer le volume d'eau chaude correspondant au nombre de tasse de café demandé. Les signaux transmis par le capteur de poids 50 permettent au système de commande 50 de déterminer quand le volume d'eau soutiré dans le réservoir 10 correspond au volume d'eau nécessaire pour réaliser le nombre de tasse de café demandé.

Le capteur de poids 30 comporte une jauge de contrainte 31 qui est agencée sur un corps métallique 32 qui est relié au bâti 2 (Fig. 1). La paroi de fond 16 du réservoir 10 est en appui sur le corps métallique 32. Le corps métallique 32 subit une déformation sous l'action du poids de l'eau contenue dans le réservoir 10. La déformation est transmise à la jauge de contrainte 31 qui émet un signal représentatif d'un poids Pi de l'eau contenue dans le réservoir 10. Le signal est une tension exprimée en millivolt de valeur Vi. On peut associer à chaque valeur Vi un poids Pi de l'eau contenue dans le réservoir 10. Le système de commande 50 comporte un microcontrôleur 51 relié à la jauge contrainte 31. Le microcontrôleur 51 comporte une mémoire 52 dans laquelle est stockée une table de correspondance Vi/ Pi.

Tel que visible à la figure 1, le réservoir 10 est rempli d'eau, la première portion 12 comporte un centre de gravité CG1 qui est à une distance D1 du plan vertical passant par l'axe de rotation 11, matérialisé par la paroi latérale 14. Le poids de l'eau contenu dans la première portion 12 applique au centre de gravité CG1 une force F1. La force F1 est égale à : H1 × S1 × d × g. d est la densité de l'eau qui est égale à 1. g correspond à l'accélération de la pesanteur à la surface de la Terre qui est égale à 9,81 m/s². La deuxième portion 13 comporte un centre de gravité CG2 qui est à une distance D2 du plan vertical passant par l'axe de rotation 11. Le poids de l'eau contenu dans la deuxième portion 13 applique au centre de gravité CG2 une force F2. La force F2 est égale à : H2 x S2 x d x g. Le capteur de poids 30 mesure une force FC qui est appliquée par la paroi de fond 16 à une distance DC du plan vertical passant par l'axe de rotation 11. La force FC est définie par l'équation : FC × DC = (F1 × D1) + (F2 × D2) = ((H1 × S1 × D1) + (H2 × S2 × D2)) × 9,81.

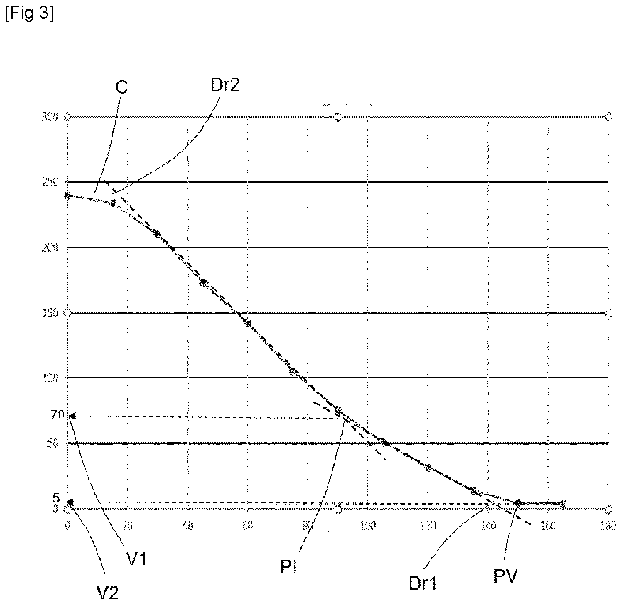

Tel que visible à la figure 3, lors du soutirage du réservoir 10, le capteur de poids 30 va être soumis à une force FCi qui va varier au cours du temps Ti en fonction de la baisse d'une hauteur d'eau H2i dans la deuxième portion 13 puis la baisse de d'une hauteur d'eau H1i dans la première portion 12. Lors du soutirage de la deuxième portion 13, la position du centre de gravité CG2 va évoluer le long d'un axe vertical positionné à la distance D2 du plan vertical passant par l'axe de rotation 11. Lors du soutirage de la première portion 12, la position du centre de gravité CG1 va évoluer le long d'un axe vertical positionné à la distance D1 du plan vertical passant par l'axe de rotation 11. Si on considère le soutirage de la deuxième portion 13, la force FCi est définie par l'équation : FCi = ((H1 × S1 × D1) + (H2i × S2 × D2)) × 9,81 / DC. Seule la valeur H2i varie pendant le temps Ti. Ainsi, l'équation donnant la force FCi au cours du temps Ti correspondant à l'écoulement de l'eau contenue dans la deuxième portion 13 est une droite de pente P2. Si on considère la première portion 12, la hauteur H2 est égale à zéro et la force FCi est définie par l'équation : FCi = (H1i × S1 × D1 × 9,81) / DC. Seule la valeur H1i varie pendant le temps Ti. Ainsi, l'équation donnant la force FCi au cours du temps Ti correspondant à l'écoulement de l'eau contenue dans la première portion 12 est une droite de pente P1.

Dans la cafetière filtre 1 du mode de réalisation décrit, la section transversale S1 est égale à 40 cm², la section transversale S2 est égale 60 cm², la hauteur H1est égale 7,5 cm, la hauteur H2 est égale 12,5 cm, la distance D1 est égale à 1 cm, la distance D2 est égale à 2,5 cm et la distance DC est égale à 2 cm. Ainsi, le rapport S1 sur S2 est égal à 0,66 et le rapport H1 sur H2 étant supérieur à 0,6. Le poids du volume d'eau contenu dans la première portion est égal à 300 grammes.

Le capteur de poids 30 est calibré dans la cafetière filtre 1 suivant un procédé qui comporte les étapes :
- a) Remplir le réservoir 10 de liquide, soit de l'eau par l'utilisateur,
- b) Mettre en marche la chaudière bitube 5 par le système de commande 50, une fois que l'utilisateur à mis en marche la cafetière filtre 1,
- c) Enregistrer la valeur Vi mesurée par le capteur de poids 30 soumis à la force FCi tous les intervalles de temps Ti dans la mémoire 52 du système de commande 50 pour déterminer une courbe C : Vi = f(Ti). La figure 3 illustre la courbe C. En abscisse, on trouve le temps en seconde. L'intervalle de temps Ti est égal à 15 secondes. En ordonnée, on trouve la valeur Vi mesurée par le capteur de poids en millivolt,
- d) Une fois les première 12 et deuxième 13 portions du réservoir 10 vidées, déterminer une pente P1 d'une première droite Dr1de la courbe C correspondant au soutirage de la première portion 12 et une pente P2 d'une deuxième droite Dr2 de la courbe C correspondant au soutirage de la deuxième portion 13,
- e) Déterminer à partir du point d'intersection PI des première et deuxième droites la valeur V1 mesurée par le capteur de poids 30. Tel que visible à la figure 3, V1 est égal à 70 mV,
- f) Calibrer le capteur de poids 30 en associant la valeur mesurée V1 au poids du liquide contenu dans la première portion 12. Le poids du liquide contenu dans la première portion 12 est égal à 300 g.
   Le tableau ci-dessous représente la table de correspondance Vi/Pi qui est stockée dans la mémoire et qui correspond à la dernière calibration du capteur de poids 30 :

**[table 1]**

| Temps (s) | Valeur capteur (Vi) (mV) | Poids eau (Pi) (g) |
|---|---|---|
| 0 | 240 | 960 |
| 15 | 234 | 936 |
| 30 | 210 | 840 |
| 45 | 173 | 692 |
| 60 | 142 | 568 |
| 75 | 105 | 420 |
| 90 | 76 | 304 |
| 105 | 51 | 204 |
| 120 | 32 | 128 |
| 135 | 14 | 56 |
| 150 | 5 | 0 |
| 165 | 5 | 0 |

On peut déterminer que le poids d'eau associé à la valeur mesurée V1 du capteur de poids 30 de 70 mV est égal à 280 g dans cette table de correspondance. Pour un poids d'eau de 300 g, il manque donc 20 g correspondant à un écart de 5 mV. Pour calibrer le capteur de poids 30, on associe donc dans une nouvelle table, au poids d'eau égal à 300 g la valeur mesurée V1 égale à 75 mV + 5 mV = 80 mV.

On pourrait ainsi calibrer le capteur de poids 30 à partir de la table de correspondance Vi/Pi stockée dans la mémoire 52 uniquement en décalant de 5 mV l'échelle des valeurs Vi par rapport au poids de l'eau Pi pour obtenir une nouvelle table de correspondance Vi/Pi qui sera stockée dans la mémoire 52.

Cependant, le procédé de calibration du capteur de poids (30) comporte également les étapes :
- g) Déterminer à partir de la courbe C une valeur mesurée V2 par le capteur de poids 30 correspondant à un point PV lorsque le réservoir 10 est vide. On peut observer sur la figure 3 qu'à partir du point P2, la courbe C est horizontale, ce qui correspond au réservoir 10 vide. A partir du point PV, la valeur mesurée V2 correspondant au poids de l'eau égal à zéro est égale à 5 mV,
- h) Calibrer le capteur de poids 30 en associant la valeur mesurée V2 au poids de l'eau égal à zéro.

On peut ainsi redéfinir une nouvelle table de correspondance Vi/Pi issue de la calibration du capteur de poids 30 qui sera stockée dans la mémoire 52 et à partir de laquelle le système de commande 50 pilotera la chaudière bitube 5 pour distribuer le volume d'eau chaude correspondant au nombre de tasse de café demandé.

**[table 2]**

| Temps (s) | Valeur capteur (Vi) (mV) | Poids eau (Pi) (g) |
|---|---|---|
| 0 | 245 | 960 |
| 15 | 239 | 936 |
| 30 | 215 | 840 |
| 45 | 178 | 692 |
| 60 | 147 | 568 |
| 75 | 109 | 420 |
| 90 | 81 | 304 |
| 105 | 56 | 204 |
| 120 | 37 | 128 |
| 135 | 18 | 56 |
| 150 | 5 | 0 |
| 165 | 5 | 0 |

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

Ainsi, dans une variante de réalisation non illustrée, la machine de distribution de boissons est une machine à café expresso et le dispositif de soutirage du liquide comporte une pompe.

## Revendications

1. Procédé de calibration d'un capteur de poids (30) agencé sur une machine de distribution de boissons (1) qui comporte un bâti (2), un réservoir (10) de liquide monté mobile dans le bâti (2), un dispositif de soutirage du liquide (5) et un système de commande (50), ledit capteur de poids (30) étant agencé entre le réservoir (10) et le bâti (2) pour déterminer et transmettre au dispositif de commande (50) une valeur représentative du poids du liquide présent dans le réservoir (10), **caractérisé en ce que** le réservoir (10) comporte selon une direction verticale une première portion (12) présentant une section transversale S1 et une deuxième portion (13) présentant une section transversale S2 et **en ce que** ledit procédé comporte les étapes :
a) Remplir le réservoir (10) de liquide,
b) Mettre en marche le dispositif de soutirage du liquide (5),
c) Enregistrer la valeur Vi mesurée par le capteur de poids (30) tous les intervalles de temps Ti dans une mémoire (52) du système de commande (50) pour déterminer une courbe C : Vi = f(Ti),
d) Déterminer une pente P1 d'une première droite Dr1 de la courbe C correspondant au soutirage de la première portion (12) et une pente P2 d'une deuxième droite Dr2 de la courbe C correspondant au soutirage de la deuxième portion (13),
e) Déterminer à partir du point d'intersection PI des première et deuxième droites une valeur V1 mesurée par le capteur de poids (30),
f) Calibrer le capteur de poids (30) en associant la valeur V1 mesurée au poids du liquide contenu dans la première portion (12).

2. Procédé de calibration d'un capteur de poids (30) selon la revendication 1, **caractérisé en ce qu'**il comporte les étapes:
g) Déterminer à partir de la courbe C la valeur mesurée V2 par le capteur de poids (30) lorsque le réservoir (10) est vide,
h) Calibrer le capteur de poids (30) en associant la valeur mesurée V2 au poids du liquide égal à zéro.

3. Procédé de calibration d'un capteur de poids (30) selon l'une quelconque des revendications 1 à 2, **caractérisé en ce que** le rapport S1 sur S2 est inférieur à 0,8.

4. Procédé de calibration d'un capteur de poids (30) selon l'une quelconque des revendications 1 à 3, **caractérisé en ce que** le réservoir (10) est mobile en rotation dans le bâti (2) autour d'un axe de rotation (11) horizontal.

5. Procédé de calibration d'un capteur de poids (30) selon la revendication 4, **caractérisé en ce que** le réservoir (10) comporte une paroi latérale (14), l'axe de rotation (11) étant agencé le long de la paroi latérale (14).

6. Procédé de calibration d'un capteur de poids (30) selon l'une quelconque des revendications 1 à 5, **caractérisé en ce que** le réservoir (10) comporte une paroi de fond (16), le capteur de poids (30) étant agencé entre la paroi de fond (16) et le bâti (2).

7. Procédé de calibration d'un capteur de poids (30) selon l'une quelconque des revendications 1 à 6, **caractérisé en ce que** la première portion (12) du réservoir (10) est agencée au-dessous de la deuxième portion (13).

8. Procédé de calibration d'un capteur de poids (30) selon l'une quelconque des revendications 1 à 7, **caractérisé en ce que** la première portion (12) du réservoir (10) présente une hauteur H1 et la deuxième portion du réservoir (10) présente une hauteur H2, le rapport H1 sur H2 étant supérieur à 0,5.

9. Procédé de calibration d'un capteur de poids (30) selon l'une quelconque des revendications 1 à 8, **caractérisé en ce que** le capteur de poids (30) comporte une jauge de contrainte (31) agencée sur un corps métallique (32) qui subit une déformation sous l'action du poids du liquide présent dans le réservoir (10).

10. Procédé de calibration d'un capteur de poids (30) selon l'une quelconque des revendications 1 à 9, **caractérisé en ce que** la machine de distribution de boissons est une machine à café filtre (1) ou une machine à thé et le dispositif de soutirage du liquide comporte une chaudière bitube (5).

## Patentansprüche

1. Verfahren zur Kalibrierung eines Gewichtssensors (30), der an einer Getränkeausgabemaschine (1) angeordnet ist, die ein Gestell (2), einen beweglich im Gestell (2) angebrachten Flüssigkeitstank (10), eine Vorrichtung zum Entnehmen der Flüssigkeit (5) und ein Steuersystem (50) umfasst, wobei der Gewichtssensor (30) zwischen dem Tank (10) und dem Gestell (2) angeordnet ist, um einen Wert, der für das Gewicht der im Tank (10) vorhandenen Flüssigkeit repräsentativ ist, zu bestimmen und an die Steuervorrichtung (50) zu übertragen, **dadurch gekennzeichnet, dass** der Tank (10) in einer vertikalen Richtung einen ersten Abschnitt (12), der einen Querschnitt S1 aufweist, und einen zweiten Abschnitt (13) umfasst, der einen Querschnitt S2 aufweist, und dadurch, dass das Verfahren die folgenden Schritte umfasst:
a) Füllen des Tanks (10) mit Flüssigkeit,
b) Einschalten der Vorrichtung zum Entnehmen der Flüssigkeit (5),
c) Aufzeichnen des vom Gewichtssensor (30) in allen Zeitintervallen Ti gemessenen Werts Vi in einem Speicher (52) des Steuersystems (50), um eine Kurve C:Vi=f(Ti) zu bestimmen,
d) Bestimmen einer Steigung P1 einer ersten Geraden Dr1 der Kurve C, die dem Entnehmen aus dem ersten Abschnitt (12) entspricht, und einer Steigung P2 einer zweiten Geraden Dr2 der Kurve C, die dem Entnehmen aus dem zweiten Abschnitt (13) entspricht,
e) Bestimmen, anhand des Schnittpunkts PI der ersten und der zweiten Geraden, eines Werts V1, der vom Gewichtssensor (30) gemessen wird,
f) Kalibrieren des Gewichtssensors (30) durch Zuordnen des gemessenen Werts V1 zum Gewicht der im ersten Abschnitt (12) enthaltenen Flüssigkeit.

2. Verfahren zur Kalibrierung eines Gewichtssensors (30) nach Anspruch 1, **dadurch gekennzeichnet, dass** es die folgenden Schritte umfasst:
g) Bestimmen, anhand der Kurve C, des vom Gewichtssensor (30) gemessenen Werts V2, wenn der Tank (10) leer ist,
h) Kalibrieren des Gewichtssensors (30) durch Zuordnen des gemessenen Werts V2 zum Gewicht der Flüssigkeit, das gleich Null ist.

3. Verfahren zur Kalibrierung eines Gewichtssensors (30) nach einem der Ansprüche 1 bis 2, **dadurch gekennzeichnet, dass** das Verhältnis S1 zu S2 kleiner als 0,8 ist.

4. Verfahren zur Kalibrierung eines Gewichtssensors (30) nach einem der Ansprüche 1 bis 3, **dadurch gekennzeichnet, dass** der Tank (10) im Gestell (2) um eine horizontale Drehachse (11) drehbeweglich ist.

5. Verfahren zur Kalibrierung eines Gewichtssensors (30) nach Anspruch 4, **dadurch gekennzeichnet, dass** der Tank (10) eine Seitenwand (14) umfasst, wobei die Drehachse (11) entlang der Seitenwand (14) angeordnet ist.

6. Verfahren zur Kalibrierung eines Gewichtssensors (30) nach einem der Ansprüche 1 bis 5, **dadurch gekennzeichnet, dass** der Tank (10) eine Bodenwand (16) umfasst, wobei der Gewichtssensor (30) zwischen der Bodenwand (16) und dem Gestell (2) angeordnet ist.

7. Verfahren zur Kalibrierung eines Gewichtssensors (30) nach einem der Ansprüche 1 bis 6, **dadurch gekennzeichnet, dass** der erste Abschnitt (12) des Tanks (10) unter dem zweiten Abschnitt (13) angeordnet ist.

8. Verfahren zur Kalibrierung eines Gewichtssensors (30) nach einem der Ansprüche 1 bis 7, **dadurch gekennzeichnet, dass** der erste Abschnitt (12) des Tanks (10) eine Höhe H1 aufweist, und der zweite Abschnitt des Tanks (10) eine Höhe H2 aufweist, wobei das Verhältnis H1 zu H2 größer als 0,5 ist.

9. Verfahren zur Kalibrierung eines Gewichtssensors (30) nach einem der Ansprüche 1 bis 8, **dadurch gekennzeichnet, dass** der Gewichtssensor (30) einen Dehnungsmessstreifen (31) umfasst, der an einem Metallkörper (32) angeordnet ist, der unter der Wirkung des Gewichts der im Tank (10) vorhandenen Flüssigkeit eine Verformung erfährt.

10. Verfahren zur Kalibrierung eines Gewichtssensors (30) nach einem der Ansprüche 1 bis 9, **dadurch gekennzeichnet, dass** die Getränkeausgabemaschine eine Filterkaffeemaschine (1) oder eine Teemaschine ist und die Vorrichtung zum Entnehmen der Flüssigkeit einen Zweirohrkessel (5) umfasst.

## Claims

1. Method for calibrating a weight sensor (30) arranged on a beverage dispensing machine (1) which comprises a frame (2), a liquid tank (10) movable mounted in the frame (2), a liquid filling device (5) and a control system (50), said weight sensor (30) being arranged between the tank (10) and the frame (2) to determine and transmit to the control device (50), a value representative of the weight of the liquid present in the tank (10), **characterized in that** the tank (10) comprises, in a vertical direction, a first portion (12) having a cross-section S1 and a second portion (13) having a cross-section S2 and **in that** said method comprises the steps:
a) Filling the liquid tank (10),
b) Switching on the liquid filling device (5),
c) Recording the value Vi measured by the weight sensor (30), all the time intervals Ti in a memory (52) of the control system (50) to determine a curve C:Vi=f(Ti),
d) Determining a slope P1 of a first straight line Dr1 of the curve C corresponding to the filling of the first portion (12) and a slope P2 of a second straight line Dr2 of the curve C corresponding to the filling of the second portion (13),
e) Determining from the intersection point PI of the first and second straight lines, a value V1 measured by the weight sensor (30),
f) Calibrating the weight sensor (30) by associating the value V1 measured with the weight of the liquid contained in the first portion (12).

2. Method for calibrating a weight sensor (30) according to claim 1, **characterized in that** it comprises the steps:
g) Determining from the curve C, the value measured V2 by the weight sensor (30) when the tank (10) is empty,
h) Calibrating the weight sensor (30) by associating the value measured V2 to the weight of the liquid equal to zero.

3. Method for calibrating a weight sensor (30) according to any one of claims 1 to 2, **characterized in that** the ratio S1 over S2 is less than 0.8.

4. Method for calibrating a weight sensor (30) according to any one of claims 1 to 3, **characterized in that** the tank (10) is rotatably movable in the frame (2) about a horizontal axis of rotation (11).

5. Method for calibrating a weight sensor (30) according to claim 4, **characterized in that** the tank (10) comprises a side wall (14), the axis of rotation (11) being arranged along the side wall (14).

6. Method for calibrating a weight sensor (30) according to any one of claims 1 to 5, **characterized in that** the tank (10) comprises a bottom wall (16), the weight sensor (30) being arranged between the bottom wall (16) and the frame (2).

7. Method for calibrating a weight sensor (30) according to any one of claims 1 to 6, **characterized in that** the first portion (12) of the tank (10) is arranged below the second portion (13).

8. Method for calibrating a weight sensor (30) according to any one of claims 1 to 7, **characterized in that** the first portion (12) of the tank (10) has a height H1 and the second portion of the tank (10) has a height H2, the ratio H1 over H2 being greater than 0.5.

9. Method for calibrating a weight sensor (30) according to any one of claims 1 to 8, **characterized in that** the weight sensor (30) comprises a stress gauge (31) arranged on a metal body (32) which undergoes a deformation under the action of the weight of the liquid present in the tank (10).

10. Method for calibrating a weight sensor (30) according to any one of claims 1 to 9, **characterized in that** the beverage dispensing machine is a filter coffee machine (1) or a tea machine, and the liquid filling device comprises a twin-tube boiler (5).
